# EUROPEAN PATENT APPLICATION

(11) **EP 4 305 973 A1**
(43) Date of publication of application: **17.01.2024**
(21) Application number: 22788464.0
(22) Date of filing: 14.04.2022
(51) Int. Cl.: A24D 1/02, A24D 1/20, A24D 1/04, D21H 21/34, D21H 27/00, D21H 19/64, D21H 17/00, C09D 5/18, C09D 1/00

(54) **AEROSOL GENERATION PRODUCT WITH LOW IGNITION PROPENSITY**

(30) Priority: 14.04.2021 KR 20210048471; 29.03.2022 KR 20220038791
(71) Applicant: KT&G Corporation, Daedeok-gu Daejeon 34337 (KR)
(72) Inventor: PARK, Chang Jin, Sejong 30100 (KR); KIM, Soo Ho, Cheongju-si, Chungcheongbuk-do 28412 (KR); AHN, Ki Jin, Daejeon 35216 (KR); CHEONG, Bong Su, Daejeon 34083 (KR); HWANG, Min Hee, Daejeon 34050 (KR)
(74) Representative: Ter Meer Steinmeister & Partner
(86) International application number: PCT/KR2022/005397
(87) International publication number: WO 2022/220609

(57) **Abstract**

An aerosol generation product with a low ignition propensity is provided. An aerosol generation product according to some embodiments of the present disclosure is used together with an aerosol generation device, and may include an aerosol formation substrate portion, a filter portion, and a wrapper formed of a flame-retardant paper material and wrapped around at least a portion of the aerosol formation substrate portion. The flame-retardant paper material may improve smoking safety of a user by reducing a possibility of ignition of the wrapper due to an abnormally high temperature during smoking, and may prevent in advance the user from experiencing unintentional smoking, by reducing the possibility of ignition of the aerosol generation product due to an act of ignition by the user.

## Description

### TECHNICAL FIELD

The present disclosure relates to an aerosol generation product with a low ignition propensity, and more particularly, to a heating-type aerosol generation product which is used together with an aerosol generation device and designed to have a low ignition propensity.

### BACKGROUND ART

The traditional form of cigarette is the combustion type, but recently, demand for alternative products that overcome the shortcomings of combustion-type cigarettes has increased. For example, there is an increasing demand for devices that generate aerosols through electrical heating and heating-type cigarettes used together with the same, and accordingly, research on heating-type cigarettes has been actively conducted.

Meanwhile, similar to combustion-type cigarettes, heating-type cigarettes may also be wrapped by wrappers formed of paper materials. However, general wrappers formed of paper materials may ignite due to abnormally high temperatures even while electrically heated, and thus may raise smoking safety issues. In addition, due to the similarity in external appearances of the two cigarettes, users may attempt to smoke heating-type cigarettes by igniting it. In this case, when ignition occurs at the ends of heating-type cigarettes, the users may experience unintentional smoking.

### DESCRIPTION OF EMBODIMENTS

### TECHNICAL PROBLEM

A technical problem to be solved through some embodiments of the present disclosure is to provide a heating-type aerosol generation product having a low ignition propensity to improve smoking safety of a user.

Another technical problem to be solved through some embodiments of the present disclosure is to provide a heating-type aerosol generation product having a low ignition propensity to reduce a possibility of ignition due to an act of ignition by a user.

The technical problems of the present disclosure are not limited to the technical problems mentioned above, and other technical problems not mentioned may be clearly understood by one of ordinary skill in the art of the present disclosure from the following description.

### TECHNICAL SOLUTION

An aerosol generation product according to some embodiments of the present disclosure may be used together with an aerosol generation device and may include an aerosol formation substrate portion, a filter portion, and a wrapper formed of a flame-retardant paper material and wrapped around at least a portion of the aerosol formation substrate portion.

### ADVANTAGEOUS EFFECTS OF DISCLOSURE

According to some embodiments of the present disclosure, a heating-type aerosol generation product including a wrapper formed of a flame-retardant paper material may be provided. The flame-retardant paper material may improve smoking safety of a user by reducing a possibility of ignition of the wrapper due to an abnormally high temperature during smoking, and may also prevent in advance the user from experiencing unintentional smoking by reducing a possibility of ignition of an aerosol generation product due to an act of ignition by the user.

In addition, by using the flame-retardant paper material having appropriate physical properties as the wrapper, workability of a product manufacturing process may be guaranteed and an ignition propensity of the aerosol generation product may be further reduced. For example, by using a flame-retardant paper material having a basis weight of about 38 g/m² to about 48 g/m² and a thickness of about 50 µm to about 60 µm as a wrapper, the workability of the product manufacturing process may be guaranteed and the ignition propensity of the aerosol generation product may be further reduced.

Effects according to the spirit of the present disclosure are not limited to the above-mentioned effects, and other effects not mentioned may be clearly understood by one of ordinary skill in the art from the following description.

### BRIEF DESCRIPTION OF DRAWINGS

FIGS. 1 and 2 are example views illustrating an aerosol generation product according to some embodiments of the present disclosure.
FIGS. 3 and 4 are example views illustrating an aerosol generation product according to some other embodiments of the present disclosure.
FIG. 5 is an example view illustrating an aerosol generation product according to some other embodiments of the present disclosure.
FIGS. 6 to 8 illustrate various types of aerosol generation devices to which aerosol generation products according to various embodiments of the present disclosure may be applied.

### BEST MODE

An aerosol generation product according to some embodiments of the present disclosure may be used together with an aerosol generation device and may include an aerosol formation substrate portion, a filter portion, and a wrapper formed of a flame-retardant paper material and wrapped around at least a portion of the aerosol formation substrate portion.

In an embodiment, the flame-retardant paper material may have a basis weight of 38 g/m² to 48 g/m².

In an embodiment, the flame-retardant paper material may have a thickness of 50 µm to 60 µm.

In an embodiment, the flame-retardant paper material may have a tensile strength of 35 N/15 mm to 45 N/15 mm.

In an embodiment, the flame-retardant paper material may have an elongation rate of 2 % to 4 %.

In an embodiment, the flame-retardant paper material may have a whiteness index of 80 % to 90 %.

In an embodiment, the flame-retardant paper material may an air permeability of 2 CU to 10 CU.

In an embodiment, the aerosol generation product may further include an external wrapper, wherein at least a portion of the external wrapper is formed of a flame-retardant paper material.

In an embodiment, the flame-retardant paper material may include a paper material to which a flame-retardant coating composition is applied, and the flame-retardant coating composition may include at least one substance selected from the group consisting of phosphoric acid, magnesium hydroxide, and aluminum hydroxide, and at least one substance selected from the group consisting of distilled water and alcohol.

### MODE OF DISCLOSURE

Hereinafter, embodiments of the present disclosure will be described in detail with reference to the accompanying drawings. Advantages and features of the present disclosure, and methods of achieving the same will become clear with reference to the detailed description of embodiments taken in conjunction with the accompanying drawings. The spirit of the present disclosure may, however, be embodied in many different forms and should not be construed as being limited to the embodiments set forth herein; rather, the following embodiments are provided so that the spirit of the present disclosure will be thorough and complete, and will fully convey the concept of the present disclosure to one of ordinary skill in the art, and the spirit of the present disclosure may be defined by claims.

When adding reference numerals to components in respective drawings, it should be noted that the same components are given the same reference numerals as much as possible even when the components are shown in different drawings. In addition, when describing various embodiments of the present disclosure, the detailed descriptions of related known components or functions, which may obscure the subject matter of the present disclosure, will be omitted.

Unless otherwise defined, all terms (including technical and scientific terms) used in the present disclosure may have the same meaning as commonly understood by one of ordinary skill in the art to which the present disclosure belongs. Also, it will be further understood that terms, such as those defined in commonly used dictionaries, will not be interpreted in an idealized or overly formal sense unless expressly so defined herein. The terms used in the present disclosure are for describing embodiments and are not intended to limit the scope of the present disclosure. As used herein, the singular forms are intended to include the plural forms as well, unless the context clearly indicates otherwise.

In addition, terms, such as first, second, A, B, (a), and (b), may be used to describe components of the present disclosure. These terms are only used to distinguish one component from another component, and the nature, sequence, or order of the corresponding component is not limited by these terms. When a component is referred to as being "coupled to", "combined with" or "connected to" another component, the component may be directly coupled or connected to the other component, but it should be understood that another component may be "coupled", "combined" or "connected" between respective components.

It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

Some terms used in various embodiments of the present disclosure will be clarified.

In the following embodiments, an "aerosol forming substrate" may refer to a material capable of forming an aerosol. The aerosol may include a volatile compound. The aerosol forming substrate may be solid or liquid.

For example, a solid aerosol forming substrate may include a solid material based on a tobacco raw material such as a reconstituent tobacco sheet, pipe tobacco, and reconstituted tobacco, and a liquid aerosol forming substrate may include a liquid composition based on nicotine, tobacco extracts, and/or various flavorings. However, the scope of the present disclosure is not limited to the examples listed above.

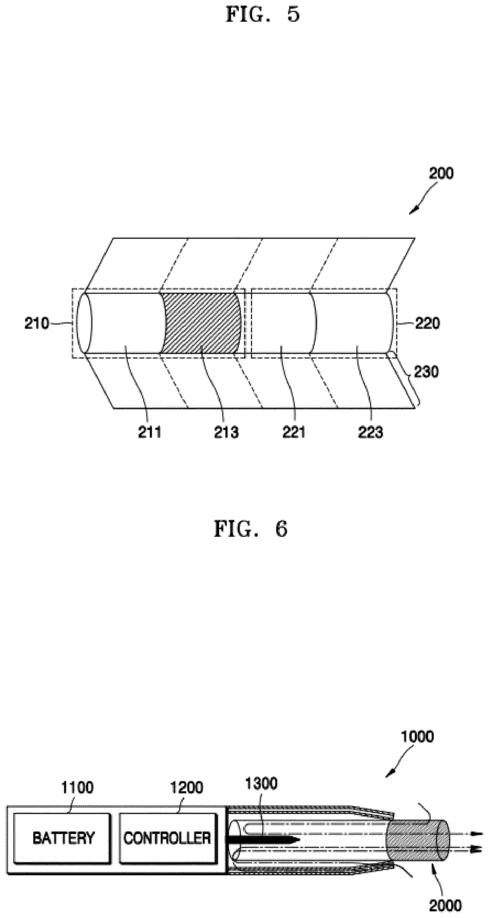

In the following embodiments, an "aerosol generation device" may refer to a device that generates aerosols by using an aerosol forming substrate to generate aerosols that may be inhaled directly into the lungs of a user lungs through the mouth of the user. Some examples of an aerosol generation device will be described with reference to FIGS. 6 to 8.

In the following embodiments, an "aerosol generation product" may refer to an product capable of generating aerosols. The aerosol generation product may include an aerosol forming substrate. A representative example of the aerosol generation product may include a cigarette, but the scope of the present disclosure is not limited thereto.

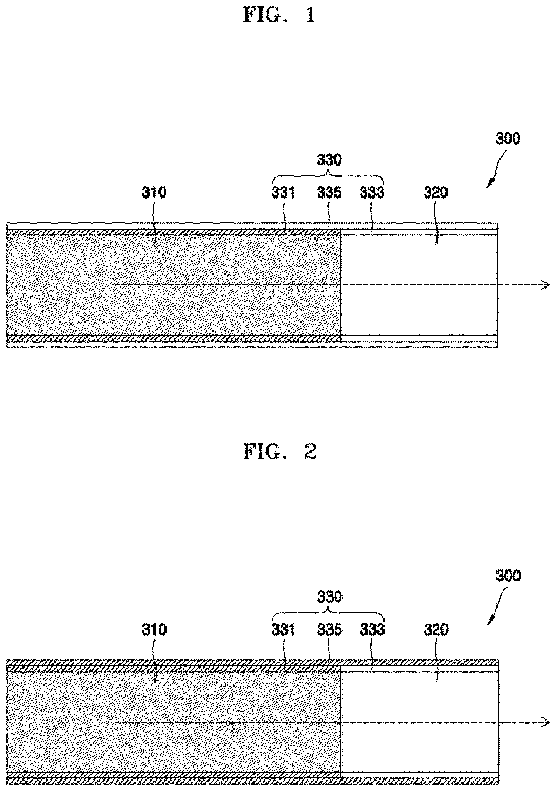

In the following embodiments, "upstream" or "upstream direction" may refer to a direction away from the mouth of a user, and "downstream" or "downstream direction" may refer to a direction closer to the mouth of the user. The terms "upstream" and "downstream" may be used to describe relative locations of components constituting the aerosol generation product. For example, in an aerosol generation product 300 illustrated in FIG. 1, a filter portion 320 may be located downstream or in a downstream direction of an aerosol formation substrate portion 310, and the aerosol formation substrate portion 310 may be located upstream or in an upstream direction of the filter portion 320.

In the following embodiments, a "longitudinal direction" may refer to a direction corresponding to a longitudinal direction axis of the aerosol generation product.

In the following embodiments, "puff" may refer to inhalation of the user, and the inhalation may refer to a situation of drawing into the mouth, nasal cavity, or lungs of the user through the mouth or nose of the user.

Hereinafter, various embodiments of the present disclosure will be described in detail with reference to the accompanying drawings.

FIG. 1 is an example view illustrating the aerosol generation product 300 according to some embodiments of the present disclosure.

Referring to FIG. 1, the aerosol generation product 300 may be an product that is used together with an aerosol generation device (e.g., 1000 of FIGS. 6 to 8) and generates an aerosol when heated. For example, the aerosol generation product 300 may be an product that is inserted into the aerosol generation device (e.g., 1000 of FIGS. 6 to 8) and generates an aerosol when electrically heated by a heating element provided in the aerosol generation device.

As illustrated in FIG. 1, the aerosol generation product 300 according to the present embodiment may include the filter portion 320, the aerosol formation substrate portion 310, and a wrapper 330. However, FIG. 1 illustrates only components related to an embodiment of the present disclosure. Therefore, one of ordinary skill in the art to which the present disclosure belongs may understand that other general-purpose components may be further included in addition to the components illustrated in FIG. 1. Hereinafter, each component of the aerosol generation product 300 will be described.

The filter portion 320 may perform a filtering function for an aerosol formed in the aerosol formation substrate portion 310. Accordingly, the filter portion 320 may include a filter (filtration) material. Examples of the filter material may include cellulose acetate fibers, paper, and the like, but the scope of the present disclosure is not limited thereto. The filter portion 320 may further include a wrapper 333 wrapped around the filter material.

The filter portion 320 may be located downstream of the aerosol formation substrate portion 310 and connected to a downstream end of the aerosol formation substrate portion 310. For example, the filter portion 320 and the aerosol formation substrate portion 310 may have a shape of a cylinder (rod), may be aligned with each other in a longitudinal axis direction, and may be connected to each other by a tipping wrapper. The tipping wrapper may connect the filter portion 320 to the aerosol formation substrate portion 310 by wrapping at least a portion of the filter portion 320 and at least a portion of the aerosol formation substrate portion 310 together. When the filter portion 320 forms a downstream end of the aerosol generation product 300, the filter portion 320 may function as a mouthpiece in contact with the mouth of a user.

The filter portion 320 may be manufactured in the form of a rod, and thus may be referred to as a filter rod 320 in some cases, and may be manufactured in various forms such as a cylindrical shape, a tube shape having a hollow inside, and a recess shape.

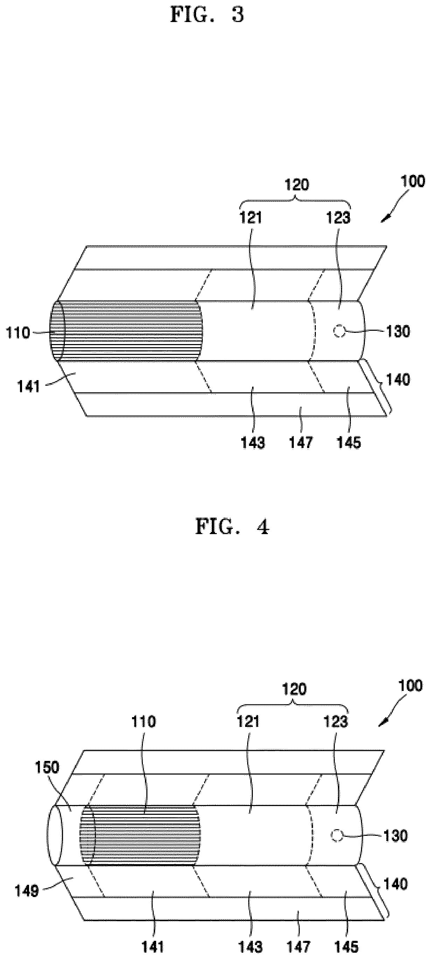

As illustrated in FIG. 1, the filter portion 320 may have a single segment structure or a multi-segment structure. The multi-segment structure is described below with reference to FIGS. 3 to 5.

The aerosol formation substrate portion 310 may perform a forming function for an aerosol. For example, the aerosol formation substrate portion 310 may form an aerosol when electrically heated, and accordingly, may include an aerosol forming substrate. The aerosol formation substrate portion 310 may further include a wrapper 331 wrapped around the aerosol forming substrate.

The aerosol forming substrate may include, for example, a tobacco material. The tobacco material may include, for example, pieces of tobacco leaves, tobacco stems, a material processed therefrom, or the like. As a more detailed example, the tobacco material may include pulverized leaves of tobacco, pulverized reconstituted tobacco, expanded pipe tobacco, expanded tobacco stems, a reconstituted tobacco sheet, and the like. However, the tobacco material is not limited thereto. In addition, the tobacco material may have the form of cut tobacco pieces, tobacco particles, tobacco sheets, tobacco beads, tobacco granules, or tobacco extracts, but are not limited thereto.

In an embodiment, the aerosol forming substrate may further include additives, such as a wetting agent (moisturizer), flavorings, and/or organic acid. For example, the wetting agent may include at least one of glycerin, propylene glycol, ethylene glycol, dipropylene glycol, diethylene glycol, triethylene glycol, tetraethylene glycol, and oleyl alcohol. The wetting agent may soften a unique taste of the tobacco material and enrich an amount of smoke by maintaining moisture in the tobacco material at an appropriate level. Also, the flavorings may include, for example, licorice, sucrose, fructose syrup, isosweet, cocoa, lavender, cinnamon, carudamom, celery, horofa, cascarilla, sandalwood, bergamot, geranium, honey essence, rose oil, vanilla, lemon oil, orange oil, mint oil, cinnamon, caraway, cognac, jasmine, chamomile, menthol, cinnamon, ylang ylang, salvia, spearmint, ginger, cilantro, clove extract (or clove material), coffee, or the like.

The aerosol formation substrate portion 310 may be located upstream of the filter portion 320 and connected to an upstream end of the filter portion 320. Accordingly, the aerosol formed in the aerosol formation substrate portion 310 may be delivered to the mouth of the user through the filter portion 320 by puffs.

The aerosol formation substrate portion 310 may also be manufactured in the form of a rod, and thus may be referred to as an aerosol forming rod 310 in some cases.

The wrapper 330 may indicate being wrapped around at least a portion of the aerosol formation substrate portion 310 and/or the filter portion 320. The wrapper 330 may refer to individual wrappers 331 and 333 of the aerosol formation substrate portion 310 and/or the filter portion 320, may refer to an external wrapper 335, such as a tipping wrapper, wrapping at least portions of the individual wrappers 331 and 333, or may refer to all of the wrappers 331, 333, and 335 used in the aerosol generation product 300.

In the present embodiment, at least a portion of the wrapper 330 may be formed of a flame-retardant paper material. The flame-retardant paper material may improve smoking safety and also prevent in advance the user from experiencing unintentional smoking, by reducing a possibility of ignition of the wrapper 330. For example, the flame-retardant paper material may improve smoking safety by reducing a possibility of ignition of the wrapper 330 due to an abnormally high temperature during smoking, and may prevent the user from experiencing unintentional smoking by reducing the possibility of ignition of the aerosol generation product 300. A detailed manufacturing method of the wrapper 330 may vary according to embodiments.

In an embodiment, as illustrated in FIG. 1, the wrapper 331, which wraps the aerosol formation substrate portion 310, may be formed of a flame-retardant paper material. The aerosol formation substrate portion 310 may be a region to which heat is intensively applied (or a region in which ignition occurs due to user carelessness), and thus, when the wrapper 331 is formed of a flame-retardant paper material, smoking safety may be greatly improved and at the same time, the possibility of ignition of the aerosol generation product 300 due to the ignition act may be effectively reduced.

In another embodiment, the external wrapper 335 may be formed of a flame-retardant paper material. Even in this case, the above-described merits may be sufficiently guaranteed.

In another embodiment, as illustrated in FIG. 2, not only the wrapper 331 but also the external wrapper 335 may be formed of a flame-retardant paper material. In this case, an ignition propensity of the aerosol generation product 300 may be further reduced, and thus, the above-described merits may be more sufficiently guaranteed.

In another embodiment, only an upstream end portion of the wrapper 331 may be formed of a flame-retardant paper material. An upstream end portion of the aerosol generation product 300 may be a place at which a direct ignition act may occur due to user carelessness, and thus, the above-described merits may be sufficiently guaranteed even when only the corresponding upstream end portion is formed of a flame-retardant paper material.

In another embodiment, the wrapper 333, which wraps the filter portion 320, may also be formed of a flame-retardant paper material.

In another embodiment, an additional wrapper (not shown), which is formed of a thermally conductive material (e.g., metal foil such as aluminum foil), may be further arranged near the aerosol formation substrate portion 330. The thermally conductive material may further reduce the ignition propensity of the aerosol generation product 300 by diffusing heat in a conductive method.

In another embodiment, the wrapper 330 may be manufactured by using a plurality of paper materials having different flame retardancy. For example, the wrapper 331, which wraps the aerosol formation substrate portion 310, may be formed of a paper material having higher flame retardancy than the wrapper 333 of the filter portion 320 or the external wrapper 335. Alternatively, the external wrapper 335 may be formed of a paper material having the highest flame retardancy. Alternatively, an upstream end region of the wrapper 331 may be formed of a paper material having higher flame retardancy than other regions. A degree of flame retardancy may be controlled by using, for example, an amount, type, concentration, and the like of a flame-retardant material, but the scope of the present disclosure is not limited thereto.

In another embodiment, the wrapper 330 may be manufactured on the basis of various combinations of the embodiments described above.

Meanwhile, physical properties of a flame-retardant paper material may be closely related to appearance aesthetics, workability of an product manufacturing process, ease of manufacturing a paper material, and the like in addition to an ignition propensity of the aerosol generation product 300, and thus, the flame-retardant paper material may be manufactured to have appropriate physical properties.

In an embodiment, the flame-retardant paper material may have a basis weight of about 30 g/m² to about 60 g/m², alternatively, about 35 g/m² to about 55 g/m², about 40 g/m² to about 55 g/m², about 40 g/m² to about 50 g/m², about 38 g/m² to about 48 g/m², about 38 g/m² to about 45 g/m², or about 40 g/m² to about 45 g/m². Within the numerical range mentioned above, the workability of the product manufacturing process may be guaranteed, and the ignition propensity of the aerosol generation product 300 may be further reduced. In the present embodiment, the basis weight of the flame-retardant paper material may be measured according to ISO 536.

In an embodiment, the flame-retardant paper material may have a thickness of about 45 µm to about 75 µm, alternatively, about 50 µm to about 70 µm, about 50 µm to about 65 µm, about 50 µm to about 60 µm, about 45 µm to about 60 µm, about 45 µm to about 60 µm, about 52 µm to about 58 µm, or about 55 µm to about 58 µm. Within the numerical range mentioned above, the workability of the product manufacturing process may be guaranteed, and the ignition propensity of the aerosol generation product 300 may be further reduced. In the present embodiment, the thickness of the flame-retardant paper material may be measured according to ISO 534.

In an embodiment, the flame-retardant paper material may have a tensile strength of about 25 N/15 mm to about 55 N/15 mm, alternatively, about 30 N/15 mm to about 50 N/15 mm, about 35 N/15 mm to about 45 N/15 mm, about 35 N/15 mm to about 50 N/15 mm, about 35 N/ 15 mm to about 45 N/15 mm, or about 38 N/15 mm to about 42 N/15 mm. Within the numerical range mentioned above, the workability of the product manufacturing process may be guaranteed, and the ignition propensity of the aerosol generation product 300 may be further reduced. In the present embodiment, the tensile strength of the flame-retardant paper material may be measured according to ISO 1924-2.

In an embodiment, the flame-retardant paper material may have an elongation rate (i.e., a fracture elongation rate) of about 1 % to about 10 %, alternatively, about 1 % to about 8 %, about 1 % to about 6 %, about 1 % to about 4 %, about 2 % to about 8 %, about 2 % to about 6 %, about 2 % to about 4 %, or about 2 % to about 3 %. Within the numerical range mentioned above, the workability of the product manufacturing process may be guaranteed, and the ignition propensity of the aerosol generation product 300 may be further reduced. In the present embodiment, the elongation rate of the flame-retardant paper material may be measured according to ISO 1924-2.

In an embodiment, the flame-retardant paper material may have a whiteness index of about 70 % or more, alternatively, about 70 % to about 95 %, about 75 % to about 95 %, about 80 % to about 90 %, or about 85 % to about 90 %. Within the numerical range mentioned above, the external appearance aesthetics of the aerosol generation product 300 may be guaranteed. In the present embodiment, the whiteness index of the flame-retardant paper material may be measured according to ISO 2470.

In an embodiment, the flame-retardant paper material may have an air permeability of about 1 CU to about 20 CU, alternatively, about 1 CU to about 15 CU, about 2 CU to about 15 CU, about 2 CU to about 10 CU, about 2 CU to about 8 CU, about 2 CU to about 6 CU, or about 3 CU to about 5 CU. Within the numerical range mentioned above, the ignition propensity of the aerosol generation product 300 may be further reduced. In the present embodiment, the air permeability of the flame-retardant paper material may be measured according to ISO 2965:2019.

The flame-retardant paper material may be formed, for example, by applying a flame-retardant coating composition to a paper material. As a detailed example, a coating composition may be applied to a portion or all of the paper material. Alternatively, the coating composition may be applied to one surface, an opposite surface, or both surfaces of the paper material. Alternatively, the coating composition may be applied to the paper material at regular intervals (e.g., the coating composition may be applied in a vertical direction (longitudinal direction) or a horizontal direction, but is applied spaced apart). Here, the application intervals may be the same as or different from each other (e.g., the intervals gradually increase or decrease). Also, a coating thickness may be the same or different.

A detailed composition material and composition ratio of the flame-retardant coating composition may vary.

For example, the flame-retardant coating composition may include at least one substance selected from the group consisting of phosphoric acid (H₃PO₄), magnesium hydrate, and aluminum hydrate. The magnesium hydrate may be, for example, magnesium hydroxide (Mg(OH)₂), but the scope of the present disclosure is not limited thereto. In addition, the aluminum hydrate may be, for example, aluminum hydroxide (AL(OH₃)), but the scope of the present disclosure is not limited thereto. The illustrated materials are flame retardant, and thus, a high-performance flame-retardant coating composition may be formed when the aforementioned materials are appropriately mixed.

In addition, for example, the flame-retardant coating composition may include at least one substance selected from the group consisting of distilled water and alcohol. The illustrated materials may be well mixed with flame-retardant solutes described above to form a coating composition that is homogeneous and may be easily applied to a paper material.

The aerosol generation product 300 according to some embodiments of the present disclosure has been described with reference to FIGS. 1 and 2. As described above, the heating-type aerosol generation product 300 including the wrapper 330 formed of the flame-retardant paper material may be provided. The flame-retardant paper material may improve the smoking safety of the user by reducing the possibility of ignition of the wrapper 330 due to an abnormally high temperature during smoking, and may prevent in advance the user from experiencing unintentional smoking by reducing the possibility of ignition of the aerosol generation product 300 due to the act of ignition by the user. In addition, by using a flame-retardant paper material having appropriate physical properties as the wrapper 330, the workability of the product manufacturing process may be guaranteed and the ignition propensity of the aerosol generation product 300 may be further reduced. For example, by using a flame-retardant paper material having a basis weight of about 38 g/m² to 48 g/m² and a thickness of about 50 µm to about 60 µm as the wrapper 330, the workability of the product manufacturing process may be guaranteed and the ignition propensity of the aerosol generation product 300 may be further reduced.

Hereinafter, an aerosol generation product 100 according to some other embodiments of the present disclosure is described with reference to FIGS. 3 and 4. However, for clarity of the present disclosure, the same description of the present embodiment as the previous embodiments is omitted.

FIG. 3 is an example view illustrating an aerosol generation product 100 according to some other embodiments of the present disclosure.

As illustrated in FIG. 3, the aerosol generation product 100 according to the present embodiment may include a filter portion 120, an aerosol formation substrate portion 110, and a wrapper 140, and the filter portion 120 may have a multi-segment structure. However, FIG. 3 illustrates only components related to an embodiment of the present disclosure. Therefore, one of ordinary skill in the art to which the present disclosure belongs may understand that other general-purpose components may be further included in addition to the components illustrated in FIG. 3.

The filter portion 120 may include a first segment 121 and a second segment 123. The filter portion 120 may further include a third segment (not shown).

The first segment 121 may perform a cooling function for an aerosol generated by the aerosol formation substrate portion 110. Accordingly, the first segment 121 may be referred to as a cooling segment 121 in some cases.

The first segment 121 may be manufactured in various forms. As an example, the first segment 121 may be a cylinder-type paper tube formed of a paper material and including a hollow. As another example, the first segment 121 may be formed of a polymer material or a biodegradable polymer material. For example, the first segment 121 may be formed of a polylactic acid (PLA) fiber, but is not limited thereto. As another example, the first segment 121 may be formed as a cellulose acetate filter having a plurality of holes. As another example, the first segment 121 may be a tube filter including a hollow. For example, the first segment 121 may be a cellulose acetate filter including a hollow. However, the first segment 121 is not limited thereto, and when performing a cooling function, may be manufactured in a different form from that illustrated.

The second segment 123 may perform a filtering function for the aerosol passing through the first segment 121. Accordingly, the second segment 123 may be referred to as a filter segment 123 in some cases. Alternatively, the second segment 123 may be located at a mouthpiece portion, and thus may be referred to as a mouthpiece segment 123.

The second segment 123 may include a filter (filtration) material to perform the filtering function. Examples of the filter material may include cellulose acetate fibers, paper, and the like, but the scope of the present disclosure is not limited thereto.

In an embodiment, as illustrated, the second segment 123 may include at least one capsule 130. Here, the capsule 130 may perform a function of generating a flavor or a function of generating an aerosol. For example, the capsule 130 may have a structure in which a liquid including a flavoring material is wrapped with a film. In addition, the capsule 130 may have a spherical or cylindrical shape, but is not limited thereto.

The aerosol formation substrate portion 110 may perform a forming function for an aerosol. The aerosol formation substrate portion 110 may correspond to the aerosol formation substrate portion 310 described above, and thus, a further description thereof is omitted.

The wrapper 140 may indicate being wrapped around at least a portion of the aerosol formation substrate portion 110 and/or the filter portion 120. The wrapper 140 may refer to individual wrappers 141, 143, and 145 of the aerosol formation substrate portion 110 and/or the filter portion 120, may refer to an external wrapper 147 wrapped around at least a portion of the individual wrappers 141, 143, and 145, or may refer to all the wrappers 141, 143, 145, and 147 used in the aerosol generation product 100.

At least a portion of the wrapper 140 may be formed of a flame-retardant paper material. The wrapper 140 may correspond to the wrapper 330 described above, and thus, a further description thereof is omitted.

Meanwhile, in an embodiment, as illustrated in FIG. 4, the aerosol generation product 100 may further include a front-end plug 150 arranged at an upstream end thereof. The front-end plug 150 may prevent the aerosol formation substrate portion 110 from being detached outwards and prevent a liquefied aerosol flowing into an aerosol generation device (e.g., 1000 of FIGS. 6 to 8) from the aerosol generating substrate portion 110, during smoking. Alternatively, the front-end plug 150 may perform a function of appropriately adjusting the entire length of the aerosol generation product 100. Alternatively, when the aerosol generation product 100 is inserted into the aerosol generation device (e.g., 1000 of FIGS. 6 to 8), the front-end plug 150 may perform a function of adjusting the aerosol formation substrate portion 110 to be arranged at an appropriate location inside the aerosol generation device. The front-end plug 150 may be formed of, for example, cellulose acetate fiber, but the scope of the present disclosure is not limited thereto. As needed, at least one channel may be formed in the front-end plug 150, and a cross-sectional shape of the channel may be manufactured in various forms.

In the embodiment described above, a flame-retardant material may be added to the inside (e.g., added to cellulose acetate fiber) or the outside (e.g., added to a wrapper 149) of the front-end plug 150. The front-end plug 150 may be located at an upstream end portion at which a direct ignition act may occur due to user carelessness, and thus, a possibility of ignition of the aerosol generation product 100 due to the ignition act may be further reduced when the flame-retardant material is added thereto. Alternatively, to achieve the same merits, the wrapper 149, which wraps the front-end plug 150, may be formed of a flame-retardant paper material, or an additional wrapper (not shown) formed of a thermally conductive material may be further arranged near the front-end plug 150.

The aerosol generation product 100 according to some embodiments of the present disclosure has been described with reference to FIGS. 3 and 4. Hereinafter, an aerosol generation product 200 according to some other embodiments of the present disclosure is described with reference to FIG. 5. However, for clarity of the present disclosure, the same description of the present embodiment as the description of the previous embodiments is omitted.

FIG. 5 is an example view illustrating an aerosol generation product 200 according to some other embodiments of the present disclosure.

As illustrated in FIG. 5, the aerosol generation product 200 according to the present embodiment may include an aerosol formation substrate portion 210 and a filter portion 220, the aerosol formation substrate portion 210 may include a plurality of segments 211 and 213, and the filter portion 220 may include a plurality of segments 221 and 223.

As illustrated, the aerosol formation substrate portion 210 may include the first segment 211 and the second segment 213. The aerosol formation substrate portion 210 may further include a third segment (not shown).

The first segment 211 may include a moisturizer. For example, the first segment 211 may include crimped paper impregnated with a moisturizer. For example, the moisturizer may include at least one of glycerin, propylene glycol, ethylene glycol, dipropylene glycol, diethylene glycol, triethylene glycol, tetraethylene glycol, and oleyl alcohol.

The second segment 213 may include a nicotine generating substrate such as a tobacco material. The nicotine generating substrate may include, for example, pipe tobacco, tobacco particles, tobacco sheets, tobacco beads, and tobacco granules. As another example, the nicotine generating substrate may also include crimped paper impregnated with tobacco extracts. When the nicotine generating substrate is heated, nicotine may be generated from the nicotine generating substrate and transferred to the filter portion 220.

The filter portion 220 may also include the plurality of segments 221 and 223. For example, the filter portion 220 may include the third segment 221 for performing a cooling function and the fourth segment 223 for performing a filtering function. The above description of the filter portion 120 of FIG. 3 may be equally applied to the filter portion 220, and thus, a further description thereof is omitted.

A wrapper 230 may correspond to the wrapper 140 described above. Therefore, the description thereof is omitted.

The aerosol generation products 100, 200, and 300 according to various embodiments of the present disclosure have been described with reference to FIGS. 1 to 5. Hereinafter, various types of aerosol generation devices 1000 to which the aerosol generation products 100, 200, and 300 described above may be applied are briefly described with reference to FIGS. 6 to 8.

FIG. 6 is an example view schematically illustrating a type of aerosol generation device 1000 to which the aerosol generation products 100, 200, and 300 described above may be applied. In particular, FIGS. 6 to 8 illustrate an example in which an aerosol generation product 2000 is accommodated in the aerosol generation device 1000, and the aerosol generation product 2000 may correspond to the aerosol generation products 100, 200, and 300 described above.

As illustrated in FIG. 6, the aerosol generation device 1000 may include a housing, a heater unit 1300, a battery 1100, and a controller 1200. However, the above components are only an example embodiment for achieving the purpose of the present disclosure, and some components may be added or omitted as needed. In addition, the respective components of the aerosol generation device 1000 illustrated in FIG. 6 represents functionally distinguished functional elements, and in an actual physical environment, a plurality of components may be implemented as being integrated with each other or a single component may be implemented as being separated into a plurality of detailed functional elements. Hereinafter, the respective components of the aerosol generation device 1000 are described.

The housing may form an external appearance of the aerosol generation device 1000. In addition, the housing may form an accommodation space in which the aerosol generation product 2000 is accommodated. The housing may be formed of a rigid material to protect internal components.

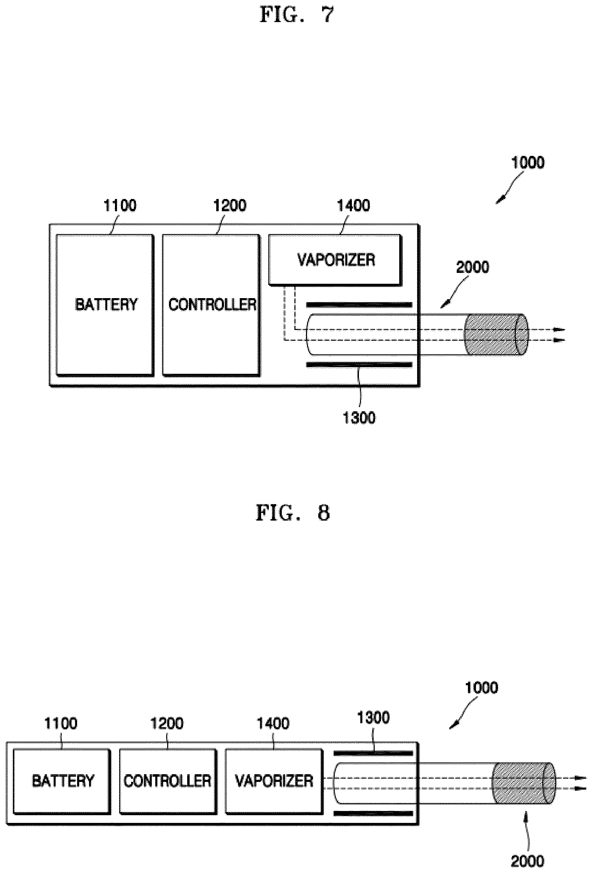

The heater unit 1300 may be arranged to heat the aerosol generation product 2000 accommodated in the accommodation space. The aerosol generation product 2000 may generate an aerosol when heated, and the generated aerosol may be inhaled through the mouth of a user. An operation, a heating temperature, and the like of the heater unit 1300 may be controlled by the controller 1200. The heater unit 1300 may include an internal heating element (refer to FIG. 6), or may include an external heating element (refer to FIGS. 7 and 8). Alternatively, the heater unit 1300 may include both the internal heating element and the external heating element.

The battery 1100 may supply power used for the aerosol generation device 1000 to operate. For example, the battery 1100 may supply power so that the heater unit 1300 may heat an aerosol forming substrate included in the aerosol generation product 2000, and may supply power needed for the controller 1200 to operate.

In addition, the battery 1100 may supply power needed for electrical components, such as a display (not shown), a sensor (not shown), and a motor (not shown) installed in the aerosol generation device 1000, to operate.

The controller 1200 may control an overall operation of the aerosol generation device 1000. For example, the controller 1200 may control operations of the heater unit 1300 and the battery 1100, and may also control operations of other components included in the aerosol generation device 1000. The controller 1200 may control power supplied by the battery 1100, a heating temperature of the heater unit 1300, and the like. In addition, the controller 1200 may determine whether or not the aerosol generation device 1000 is in an operable state, by checking a state of each of the components of the aerosol generation device 1000.

The controller 1200 may be implemented by at least one processor. The processor may be implemented as an array of a plurality of logical gates, or a combination of a general-purpose microprocessor and a memory that stores programs that may be executed by the microprocessor. In addition, one of ordinary skill in the art to which the present disclosure belongs may clearly understand that the controller 1200 may be implemented as other types of hardware.

Hereinafter, other types of aerosol generation devices 1000 are briefly described with reference to FIGS. 7 and 8.

FIG. 7 illustrates an aerosol generation device 1000 in which a vaporizer 1400 and an aerosol generation product 2000 are arranged in parallel, and FIG. 8 illustrates an aerosol generation device 1000 in which a vaporizer 1400 and an aerosol generation product 2000 are arranged in series. However, an internal structure of an aerosol generation device is not limited to those illustrated in FIGS. 7 and 8, and an arrangement of components may be changed according to a design method.

In FIGS. 7 and 8, the vaporizer 1400 may include a liquid storage tank for storing a liquid aerosol forming substrate, a wick for absorbing an aerosol forming substrate, and a vaporizing element for vaporizing the absorbed aerosol forming substrate to generate an aerosol. The vaporizing element may be implemented in various forms such as a heating element and a vibration element. In some cases, the vaporizer 1400 may be designed to have a structure that does not include a wick.

The aerosol generated by the vaporizer 1400 may pass through the aerosol generation product 2000 and be inhaled through the mouth of a user. The vaporizing element of the vaporizer 1400 may also be controlled by the controller 1200.

Various types of aerosol generation devices 1000 to which the aerosol generation products 100, 200, and 300 according to various embodiments of the present disclosure may be applied have been schematically described with reference to FIGS. 6 to 8.

Hereinafter, the configuration and effect of the aerosol generation product (e.g., 100) described above are described in more detail through embodiments and a comparative example. However, the following embodiments are only some examples of various types of aerosol generation products that may be implemented through the present disclosure, and thus, the scope of the present disclosure is not limited by the following embodiments.

### Embodiment 1

A heating-type cigarette having the same structure as the aerosol generation product 100 illustrated in FIG. 4 is manufactured. In detail, the heating-type cigarette is manufactured by using a flame-retardant paper material having physical properties shown in Table 1 below as a wrapper (e.g., 141) of an aerosol formation substrate portion (e.g., 110).

**Table 1**

| Category (Unit) | Physical Properties | Relevant Standards |
|---|---|---|
| Basis Weight (g/m²) | 43.0 | ISO 536 |
| Tensile Strength (N/15 mm) | 40.8 | ISO 1924-2 |
| Elongation Rate (%) | 2.6 | ISO 1924-2 |
| Thickness (µm) | 56.1 | ISO 534 |
| Whiteness Index (%) | 86.0 | ISO 2470 |
| Air Permeability (CU) | 4.1 | ISO 2965:2019 |

### Embodiment 2

The same heating-type cigarette as in Embodiment 1 is manufactured, except that a flame-retardant paper material having the physical properties shown in Table 1 above is used as an external wrapper (e.g., 147).

### Embodiment 3

The same heating-type cigarette as in Embodiment 1 is manufactured, except that a flame-retardant paper material having the physical properties shown in Table 1 above is used as a wrapper (e.g., 141) of an aerosol formation substrate portion (e.g., 110) and an external wrapper (e.g., 147).

### Embodiment 4

The same heating-type cigarette as in Embodiment 1 is manufactured, except that a flame-retardant paper material having a basis weight of about 38 g/m², a tensile strength of about 28 N/15 mm, and a thickness of about 45 µm is used.

### Comparative Example 1

The same heating-type cigarette as in Embodiment 1 is manufactured, except that a paper wrapper material of a heating-type cigarette sold on the market is unchangeably used.
Table 2 below summarizes main components of the heating-type cigarettes according to Embodiments 1 to 4 and Comparative Example 1.

**Table 2**

| Category | Flame-retardant Paper Material | | |
|---|---|---|---|
| | Applicatio n Status | Applied Portion | Physical Properties |
| Embodiment 1 | applied O | wrapper of aerosol formation substrate portion | refer to Table 1 |
| Embodiment 2 | applied O | external wrapper | |
| Embodiment 3 | applied O | wrapper of aerosol formation substrate portion + external wrapper | |
| Embodiment 4 | applied O | wrapper of aerosol formation substrate portion | - basis weight: about 32 g/m² |
| | | | - tensile strength: about 28 N/15 mm |
| | | | - thickness: about 45 µm |
| Comparative Example 1 | applied X | - | - |

### Experimental Example 1: Evaluation of Ignition Propensity

Experiments are conducted to evaluate ignition propensities of the heating-type cigarettes according to Embodiments 1 to 5 and Comparative Example 1. In detail, a front-end plug (e.g., 150) of the manufactured heating-type cigarettes is cut, and an aerosol formation substrate portion is directly ignited with a combustible heat source under Health Canada (HC) smoking conditions. In addition, a self-extinguishing time point of each of the heating-type cigarettes is measured while puffing (smoking). Here, an amount of mainstream smoke inhaled per puff is set to about 55 mL, a puff time is set to about 2 seconds, and a puff interval is set to about 30 seconds, and a total of 10 repetitive experiments are performed on each of the heating-type cigarettes on the basis of 8 puffs per time. Results of the experiments are shown in Tables 3 and 4 below. For reference, in Table 3 below, the self-extinguishing time point of three puffs may indicate that the heating-type cigarette is self-extinguished after a second puff but before a third puff. In addition, self-extinguishing rate in Table 4 are calculated on the basis of the results of the experiments shown in Table 3, and a self-extinguishing rate of 100 % before five puffs may indicate that the heating-type cigarette is self-extinguished before a fifth puff in all the experiments.

**Table 3**

| Number of experiments | Self-extinguishing time point (puff) | | | | |
|---|---|---|---|---|---|
| | Embodiemnt 1 | Embodiment 2 | Embodiment 3 | Embodiment 4 | Comparativ e Example 1 |
| One time | 4 | 3 | 3 | 4 | 7 |
| Two times | 2 | 3 | 3 | 3 | 7 |
| Three times | 2 | 3 | 3 | 4 | 8 |
| Four times | 4 | 3 | 3 | 5 | 8 |
| Five times | 5 | 5 | 2 | 6 | 8 |
| Six times | 3 | 3 | 2 | 5 | 7 |
| Seven times | 3 | 3 | 3 | 4 | 8 |
| Eight times | 4 | 2 | 3 | 5 | 8 |
| Nine Times | 3 | 3 | 3 | 4 | 8 |
| Ten times | 3 | 3 | 4 | 5 | 7 |

**Table 4**

| Category | Self-extinguishing Rate (%) | | | |
|---|---|---|---|---|
| | before 2 puffs | before 3 puffs | before four puffs | before five puffs |
| Embodiemnt 1 | 20% | 60% | 90% | 100 % |
| Embodiment 2 | 10% | 90% | 90% | 100 % |
| Embodiment 3 | 20% | 90% | 100% | - |
| Embodiment 4 | 0% | 10% | 50% | 90% |
| Comparative Example 1 | 0% | 0% | 0% | 0% |

Referring to Table 3 and Table 4, the self-extinguishing rates of the heating-type cigarettes according to Embodiments 1 to 4 are much superior to that in Comparative Example 1. Accordingly, a wrapper formed of a flame-retardant paper material may significantly reduce an ignition propensity of an aerosol generation product. In addition, the self-extinguishing time point of the heating-type cigarette according to Embodiment 3 may be generally earlier than that in Embodiment 1. Accordingly, when a flame-retardant paper material is applied doubly (or multiple times), the ignition propensity of the aerosol generation product may be further reduced.

In addition, the self-extinguishing rate of the heating-type cigarette according to Embodiment 1 may be superior to that in Embodiment 4. In detail, the self-extinguishing rate in Embodiment 1 may be about 60 % on the basis of three puffs, but the self-extinguishing rate in Embodiment 4 may be only about 10 %. Accordingly, physical properties (e.g. a basis weight, a thickness, and a tensile strength) of a paper material may affect an ignition propensity of the aerosol generation product, and thus, a flame-retardant paper material having a basis weight of about 32 g/m² or more, a tensile strength of about 28 N/15 mm or more, and a thickness of about 45 µm or more may be used as a wrapper to sufficiently reduce the ignition propensity of the aerosol generation product.

In addition, although not shown in Table 3 and Table 4 above, workability of a manufacturing process may be significantly reduced due to durability of a material when manufacturing the heating-type cigarette according to Embodiment 4. Accordingly, in terms of workability of the manufacturing process, a flame-retardant paper material having a basis weight of about 32 g/m² or more, a tensile strength of about 28 N/15 mm or more, and a thickness of about 4 5µm or more may be used as a wrapper.

The configuration and effect of the aerosol generation product (e.g., 100) described above have been described in more detail through Embodiments and Comparative Example.

Although embodiments of the present disclosure have been described above with reference to the accompanying drawings, one of ordinary skill in the art to which the present disclosure belongs may understand that the present disclosure may be implemented in other specific forms without changing the spirit or essential features thereof. Therefore, the embodiments described above should be understood in all respects as illustrative and not restrictive. The scope of the present disclosure should be interpreted by claims below, and all technical ideas within the scope equivalent thereto should be interpreted as being included in the scope of the rights of the technical idea defined by the present disclosure.

## Claims

1. An aerosol generation product used together with an aerosol generation device, the aerosol generation product comprising:
an aerosol formation substrate portion;
a filter portion; and
a wrapper formed of a flame-retardant paper material and wrapped around at least a portion of the aerosol formation substrate portion.

2. The aerosol generation product of claim 1, wherein the flame-retardant paper material has a basis weight of 38 g/m² to 48 g/m².

3. The aerosol generation product of claim 1, wherein the flame-retardant paper material has a thickness of 50 µm to 60 µm.

4. The aerosol generation product of claim 1, wherein the flame-retardant paper material has a tensile strength of 35 N/15 mm to 45 N/15 mm.

5. The aerosol generation product of claim 1, wherein the flame-retardant paper material has an elongation rate of 2 % to 4 %.

6. The aerosol generation product of claim 1, wherein the flame-retardant paper material has a whiteness index of 80 % to 90 %.

7. The aerosol generation product of claim 1, wherein the flame-retardant paper material has an air permeability of 2 CU to 10 CU.

8. The aerosol generation product of claim 1, further comprising an external wrapper wrapped around the wrapper, wherein at least a portion of the external wrapper is formed of a flame-retardant paper material.

9. The aerosol generation product of claim 1, wherein the flame-retardant paper material comprises a paper material to which a flame-retardant coating composition is applied, and the flame-retardant coating composition comprises at least one substance selected from the group consisting of phosphoric acid, magnesium hydroxide, and aluminum hydroxide, and at least one substance selected from the group consisting of distilled water and alcohol.
